**Europäisches Patentamt**

**European Patent Office**

**Office européen des brevets**

(19)

(11) Veröffentlichungsnummer: **0 171 666
B1**

# (12) EUROPÄISCHE PATENTSCHRIFT

(45) Veröffentlichungstag der Patentschrift:
**19.11.87**

(21) Anmeldenummer: **85109244.5**

(22) Anmeldetag: **23.07.85**

(51) Int. Cl.⁴: **B 60 D 1/00**

(54) Anhängevorrichtung zum Anschliessen eines gezogenen Fahrzeuges an ein ziehendes.

(30) Priorität: **26.07.84 US 634513**

(43) Veröffentlichungstag der Anmeldung:
**19.02.86 Patentblatt 86/8**

(45) Bekanntmachung des Hinweises auf die Patenterteilung:
**19.11.87 Patentblatt 87/47**

(84) Benannte Vertragsstaaten:
**AT DE FR GB IT SE**

(56) Entgegenhaltungen:
**EP - A - 0 138 519
GB - A - 1 594 433
GB - A - 2 042 316
US - A - 2 983 523
US - A - 3 863 955**

(73) Patentinhaber: **DEERE & COMPANY, 1 John Deere Road,
Moline Illinois 61265 (US)**

(72) Erfinder: **Giesmann, Kendall Lee, Route 1, Box 32, Traer,
Iowa 50675 (US)**

(74) Vertreter: **Feldmann, Bernhard et al, DEERE &
COMPANY European Office, Patent Department
Steubenstrasse 36-42 Postfach 503,
D-6800 Mannheim 1 (DE)**

ACTORUM AG

## Beschreibung

Die Erfindung bezieht sich auf eine Anhängevorrichtung zum Anschliessen eines gezogenen Fahrzeuges an ein ziehendes mit einem über wenigstens einen hydraulisch beaufschlagbaren Zylinder höhenverstellbaren Zugglied, an dem wenigstens ein an einem fahrzeugfesten Rahmen gelagerter Winkelhebel angreift, wobei der Rahmen mit wenigstens einem sich in Längsrichtung erstreckenden Langloch versehen ist, in dem das Zugglied während der Höhenverstellung über einen ersten Zapfen derart längsverschiebbar gelagert ist, dass es sich beim Absenken nach rückwärts verschiebt.

Derartige Anhängevorrichtungen dienen in der Regel zum Anschliessen eines gezogenen Gerätes oder eines Anhängers an einen Ackerschlepper. Üblicherweise (US-A-2 983 523) sind derartige Zugglieder um einen fahrzeugfesten Schwenkpunkt durch Betätigung der Dreipunkthydraulik aus einer abgesenkten Stellung in eine angehobene Stellung verschwenkbar, wobei in der abgesenkten Stellung ein geräteseitig angeordnetes Teil beispielsweise von einem Zughaken an dem Zugglied erfasst wird und in der angehobenen Position gesichert ist. Derartige Zugglieder bewegen sich somit bei ihrer Schwenkbewegung auf einem Kreisbogen, wobei der Zughaken beim Absenken nach unten und nach vorne verschwenkt und aus dem Blickfeld einer auf dem Ackerschlepper sitzenden Bedienungsperson gerät, so dass sie das Ankuppeln des geräteseitigen Teiles nicht sehen kann.

Bei der Anhängevorrichtung, von der die Erfindung ausgeht (GB-A-2 042 316), ist dieses Problem bereits dadurch gelöst worden, dass das Zugglied sich beim Absenken nach unten und nach rückwärts verschiebt und somit der Ankuppelvorgang durch die Bedienungsperson eingesehen werden kann. Im einzelnen wird hierbei jedoch das Zugglied über die an einem Ackerschlepper normalerweise vorhandene Gerätekupplung angehoben, wobei an die Hubarme der Geräteanhebevorrichtung teleskopische Hubstangen angreifen, die anderenends an den am fahrzeugfesten Rahmen gelagerten Hebeln angreifen, die wiederum gelenkig mit seitlich am rückwärtigen Ende des Zuggliedes fest angebrachten Schenkeln verbunden sind. Durch diese Anordnung wird zwar der angestrebte Erfolg zumindest teilweise erzielt, doch ist diese Anhängevorrichtung von der Geräteanhebevorrichtung abhängig und in ihrem Aufbau sehr aufwendig und nach rückwärts ausladend, wodurch der dort bei Ackerschleppern knapp bemessene Raum noch unübersichtlicher wird.

Die mit der Erfindung zu lösende Aufgabe wird darin gesehen, diese Anhängevorrichtung dahingehend auszubilden, dass ein von der Geräteanhebevorrichtung unabhängiger Zylinder mit relativ kurzem Hubweg Verwendung findet. Diese Aufgabe ist nach der Erfindung dadurch gelöst worden, dass der Winkelhebel das Zugglied in dessen oder etwa in dessen Mittenbereich an seinem einen freien Schenkel aufnimmt, während der andere freie Schenkel in einem in dem Rahmen vorgesehenen kurvenförmigen Langloch über einen zweiten Zapfen geführt ist. Auf diese Weise verschiebt sich das Zugglied beim Absenken nach unten und rückwärts, so dass es in der abgesenkten Position im Blickfeld einer sich auf dem ziehenden Fahrzeug befindenden Bedienungsperson verbleibt, wodurch diese den Ankuppelvorgang überwachen kann. Durch die erfindungsgemässe Anordnung benötigt der Zylinder nur einen relativ kurzen Hubweg, so dass die Hubkapazität wirtschaftlich genutzt, das Hydrauliksystem am ziehenden Fahrzeug nicht übermässig beansprucht wird, darüber hinaus sich das Zugglied in einfacher Weise während der Höhenverstellung längsverschieben kann und dabei eine gute Führung gesichert ist.

Wenn nach einem weiteren Vorschlag der Erfindung der Zylinder an dem zweiten Zapfen angeschlossen ist, kann der Zughaken beim Ein- und Ausfahren des Zylinders leicht angehoben bzw. abgesenkt werden.

Zweckmässig ist der Zylinder derart an den Rahmen angelenkt, dass der zweite Zapfen beim Ausfahren der Kolbenstange des Zylinders in dem kurvenförmigen Langloch nach oben und rückwärts und beim Einfahren der Kolbenstange sich nach unten und vorwärts in dem zugehörigen Langloch verschiebt, während sich der erste Zapfen beim Ausfahren der Kolbenstange in seinem Langloch nach hinten und beim Ausfahren der Kolbenstange nach vorne verstellt.

Da der Zylinder beim Ein- und Ausfahren um eine horizontale Achse verschwenkt und damit eine einfache Anschlussmöglichkeit an den Winkelhebel gewährleistet ist, wird ferner vorgeschlagen, dass der Winkelhebel ebenfalls mit einem kurvenförmigen Langloch versehen ist, in dem der zweite Zapfen verschiebbar ist.

Als vorteilhaft hat sich gezeigt, dass nach einer Ausführungsform der Erfindung das kurvenförmige Langloch im Rahmen auf einem Kreisbogen liegt, dessen Mittelpunkt mit Bezug auf die Anlenkstelle des Winkelhebels an den Rahmen nach unten und rückwärts versetzt ist.

Damit das Zugglied besonders gut geführt werden kann und damit der Zylinder relativ geschützt ist, wird nach einem weiteren Merkmal einer Ausführungsform der Erfindung vorgeschlagen, dass der Rahmen Seitenteile aufweist, in denen die Langlöcher vorgesehen und zwischen denen das Zugglied und der Zylinder·angeordnet sind. Dabei können die Zapfen in den Langlöchern auf Rollen geführt werden.

In der Zeichnung ist ein nachfolgend näher erläutertes Ausführungsbeispiel der Erfindung dargestellt. Es zeigt:

Fig. 1 einen Ackerschlepper, der über eine Anhängevorrichtung an einen Anhänger angeschlossen werden kann, in vereinfachter Ausführung;

Fig. 2 die Anhängevorrichtung nach der Erfindung im grösseren Massstab;

Fig. 3 den an dem Ackerschlepper zu befestigenden Rahmen zur Aufnahme eines Zuggliedes;

Fig. 4 die Draufsicht zu Fig. 3, und

Fig. 5 einen Winkelhebel in Seitenansicht, über den das Zugglied an den Rahmen angeschlossen wird.

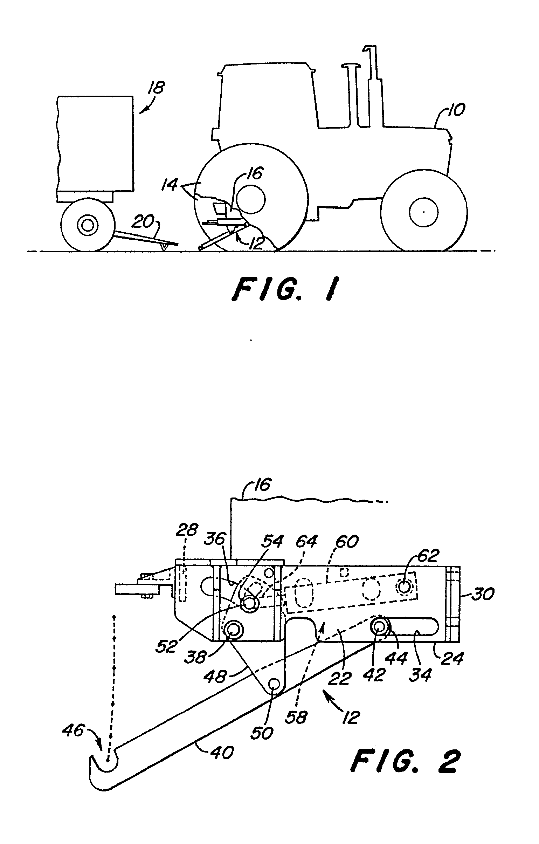

In Fig. 1 der Zeichnung ist ein Ackerschlepper 10 mit einer Anhängevorrichtung 12 dargestellt, die mittig zwischen zwei rückwärtigen Rädern 14 an einem Getriebegehäuse 16 angeordnet ist und zum Anschliessen eines Anhängers oder eines Gerätes 18 dient. Dieses ist hierzu mit einer schwenkbaren Deichsel 20 versehen und befindet sich zum Anschliessen an den Ackerschlepper rückwärtig des Ackerschleppers.

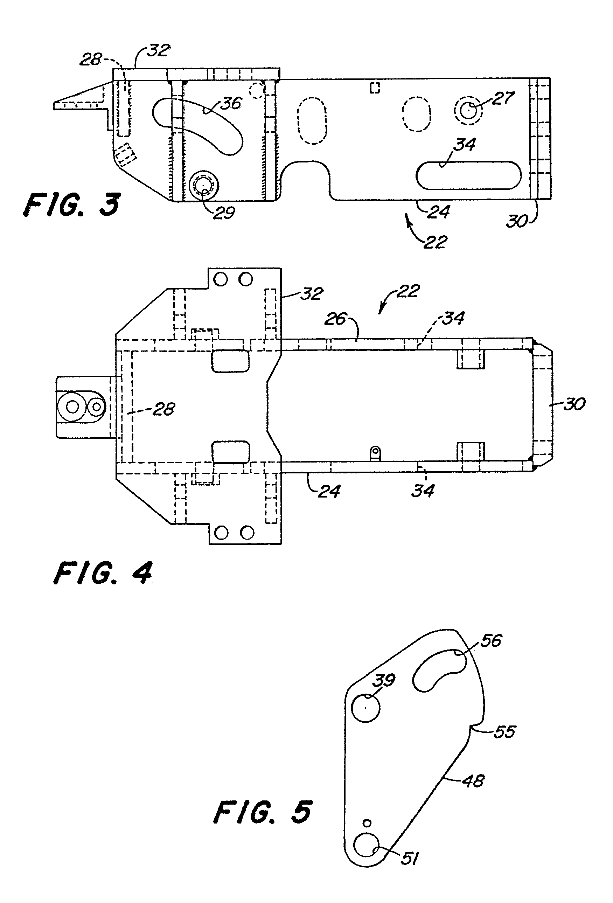

Aus den Fig. 2, 3 und 4 ist erkennbar, dass die Anhängevorrichtung 12 mit einem Rahmen 22 versehen ist, der Seitenteile 24 und 26, eine rückwärtige Platte 28, eine frontseitige Platte 30 und eine Deckplatte 32 aufweist. Je ein sich in Fahrzeuglängsrichtung erstreckendes horizontales Langloch 34 ist in dem vorderen unteren Teil eines jeden Seitenteils 24 und 26 eingearbeitet. In den rückwärtigen oberen Bereichen der Seitenteile 24 und 26 ist je ein kurvenförmiges Langloch 36 vorgesehen. Die Langlöcher 36 sind konkav in der unteren rückwärtigen Richtung gestaltet. Wie am besten aus Fig. 3 zu ersehen ist, liegen die kurvenförmigen Langlöcher 36 auf einem Kreisbogen, dessen Mittelpunkt sich rückwärtig und etwas unter der Mittellinie einer Anschlussstelle 29 befindet. Diese ist in den Seitenteilen 24 und 26 des Rahmens 22 vorgesehen, die ausserdem noch Anschlussbohrungen 27 aufweisen.

In den Langlöchern 34 ist das frontseitige Ende eines Zuggliedes 40 über einen Zapfen 42 und Rollen 44 schwenkbar angeordnet, die in den Langlöchern 34 laufen. Das rückwärtige Ende des Zuggliedes 40 ist mit einem Zughaken 46 versehen, um die Deichsel 20 des Gerätes 18 aufnehmen zu können.

An die Seitenteile 24 und 26 können zum Anschluss des Zuggliedes 40 zwei Winkelhebel 48 angelenkt werden. Hierzu dienen Zapfen 38, die in den Anschlussstellen 29 aufgenommen und durch Bohrungen 39 in den Winkelhebeln 48 gesteckt sind. Zusätzlich sind die Winkelhebel 48 noch mit den gegenüberliegenden Seiten des Mittenbereiches des Zuggliedes 40 über Bolzen 50 verbunden, die durch in den Winkelhebeln 48 vorgesehene Bohrungen 51 geführt sind. Ein weiterer Zapfen 52 verbindet beide Winkelhebel 48 an ihren dem Zugglied abgelegenen freien Schenkeln miteinander und mit Rollen 54, die in den kurvenförmigen Langlöchern 36 des Rahmens 22 und in kurvenförmigen Langlöchern 56 der Winkelhebel 48 geführt sind. Wie aus Fig. 5 hervorgeht, liegen die kurvenförmigen Langlöcher 56 der Winkelhebel 48 auf einem Kreisbogen, dessen Mittelpunkt vor und etwas über der Mittenachse der Bohrungen 39 liegt. Die Winkelhebel 48 sind zusätzlich noch mit Sperrnuten 55 versehen, in die nicht gezeigte Schwenkplatten einrasten können, um das Zugglied in der angehobenen Position arretieren zu können. Die Schwenkplatten können aus den Nuten 55 ausrasten, wenn die Bedienungsperson ebenfalls der Einfachheit halber in der Zeichnung nicht dargestellte Kabelgestängeverbindungen betätigt.

Zum Anheben und Absenken des Zuggliedes 40 dient ein in Fig. 2 dargestellter hydraulisch beaufschlagbarer Zylinder 58 mit einem Gehäuse 60, das schwenkbar zwischen den Seitenteilen 24 und 26 des Rahmens über einem Zapfen 62 angeordnet ist, der seinerseits wiederum von den Anschlussbohrungen 27 aufgenommen ist. Die Kolbenstange 64 des Zylinders 58 ist an den Zapfen 52 angeschlossen.

Fig. 2 zeigt das Zugglied 40 in seiner abgesenkten Position. Um es aus dieser in seine angehobene Stellung hochfahren zu können, muss der Zylinder 58 derart betätigt werden, dass seine Kolbenstange 64 ausgefahren wird. Bei diesem Vorgang werden die Rollen 54 in den Langlöchern 36 und 56 sich verschieben, wobei die Winkelhebel 48 mit Bezug auf Fig. 2 sich entgegen dem Uhrzeigerdrehsinn verstellen, wodurch das Zugglied 40 angehoben wird, und wobei das frontseitige Ende des Zuggliedes 40 in den Langlöchern 34 sich nach vorne verschiebt, während sich das rückwärtige Ende des Zuggliedes 40 nach oben und vorne in seine angehobene Position bewegt.

Zum Absenken des Zuggliedes 40 muss die Kolbenstange 64 des Zylinders 58 eingefahren werden, wobei die Winkelhebel 48 im Uhrzeigerdrehsinn verschwenken. Hierdurch wird das frontseitige Ende des Zuggliedes 40 in den Langlöchern 34 nach rückwärts verschoben, während das rückwärtige Ende des Zuggliedes 40 sich nach rückwärts und unten in etwa einer geraden Linie mit Bezug auf die Blickrichtung der Bedienungsperson bewegt, und zwar zurück in die in Fig. 2 dargestellte Stellung. Durch diese besondere Führung bleibt der Zughaken 46 in dem Blickfeld der nicht dargestellten Bedienungsperson, wenn das Zugglied 40 abgesenkt wird, weil sich der Zughaken nicht nach vorne und unten beim Absenken bewegt, was erfolgen würde, wenn das Zugglied um einen fahrzeugfesten Gelenkpunkt verschwenkbar wäre. Dieses System ergibt ausserdem eine hinreichende Bodenfreiheit und eine ausreichende Hubkapazität mit lediglich einem einzigen Zylinder 58. Schliesslich ist die Hubkraft an dem Zugglied im wesentlichen konstant beim Ausfahren der Kolbenstange 64 des Zylinders. Hieraus folgt, dass bei einer gegebenen Hubkapazität der zu wählende Zylinder nicht überdimensioniert zu werden braucht, was erforderlich wäre, wenn die Hubkapazität als Funktion der Kolbenverschiebung variiert. Schliesslich wird darauf hingewiesen, dass diese Anhängevorrichtung nicht nur zum Anschliessen von Ackerschleppern an Geräte oder Anhänger dient, sondern überall dort Verwendung finden kann, wo ein ziehendes Fahrzeug an ein gezogenes angeschlossen werden muss.

**Patentansprüche**

1. Anhängevorrichtung zum Anschliessen eines gezogenen Fahrzeuges (18) an ein ziehendes (10) mit einem über wenigstens einen hydraulisch beaufschlagbaren Zylinder (58) höhenverstellbaren Zugglied (40), an dem wenigstens ein an einem fahrzeugfesten Rahmen (22) gelagerter Winkelhebel (48) angreift, wobei der Rahmen (22) mit wenigstens einem sich in Längsrichtung erstreckenden Langloch (34) versehen ist, in dem das Zugglied (40) während der Höhenverstellung über einen ersten Zapfen (42) derart längsverschiebbar gelagert ist, dass es sich beim Absenken nach rückwärts verschiebt, dadurch gekennzeichnet, dass der Winkelhebel das Zugglied (40) in dessen oder etwa in dessen Mittenbereich an seinem einen freien Schenkel aufnimmt, während der andere freie Schenkel in einem in dem Rahmen (22) vorgesehenen kurvenförmigen Langloch (36) über einen zweiten Zapfen (52) geführt ist.

2. Anhängevorrichtung nach Anspruch 1, dadurch gekennzeichnet, dass der Zylinder (58) an den zweiten Zapfen (52) angeschlossen ist.

3. Anhängevorrichtung nach Anspruch 2, dadurch gekennzeichnet, dass der Zylinder (58) derart an dem Rahmen (22) angelenkt ist, dass der zweite Zapfen (52) beim Ausfahren der Kolbenstange (64) des Zylinders (58) in dem kurvenförmigen Langloch (36) nach oben und rückwärts und beim Einfahren der Kolbenstange (64) sich nach unten und vorwärts in dem zugehörigen Langloch (36) verschiebt, während sich der erste Zapfen (42) beim Ausfahren der Kolbenstange (64) in seinem Langloch (34) nach hinten und beim Einfahren der Kolbenstange (64) nach vorne verstellt.

4. Anhängevorrichtung nach einem oder mehreren der vorherigen Ansprüche, dadurch gekennzeichnet, dass der Winkelhebel (48) ebenfalls mit einem kurvenförmigen Langloch (56) versehen ist, in dem der zweite Zapfen (52) verschiebbar ist.

5. Anhängevorrichtung nach einem oder mehreren der vorherigen Ansprüche, dadurch gekennzeichnet, dass das kurvenförmige Langloch (36) im Rahmen (22) auf einem Kreisbogen liegt, dessen Mittelpunkt mit Bezug auf die Anlenkstelle (29) des Winkelhebels (48) an den Rahmen (22) nach unten und rückwärts versetzt ist.

6. Anhängevorrichtung nach einem oder mehreren der vorherigen Ansprüche, dadurch gekennzeichnet, dass der Rahmen (22) Seitenteile (24, 26) aufweist, in denen die Langlöcher (34, 36) vorgesehen und zwischen denen das Zugglied (40) und der Zylinder (60) angeordnet sind.

7. Anhängevorrichtung nach einem oder mehreren der vorherigen Ansprüche, dadurch gekennzeichnet, dass der Winkelhebel (48) in seiner das Zugglied (40) anhebenden Stellung arretierbar ist.

## Claims

1. A towing device for coupling a towed vehicle (18) to a towing vehicle (10) comprising a tow member (40) which is adjustable in respect of height by way of at least one hydraulically actuable cylinder (58) and which is engaged by at least one angle lever (48) mounted on a frame (22) which is fixed with respect to the vehicle, wherein the frame (22) is provided with at least one slot (34) which extends in the longitudinal direction and in which the tow member (40) is mounted for longitudinal displacement during the adjustment in respect of height by way of a first journal (42) in such a way that the tow member is displaced rearwardly when it is lowered, characterised in that the angle lever carries the tow member (40) in or substantially in the centre region thereof at its one free leg while the other free leg is guided by way of a second journal (52) in a curved slot (36) in the frame (22).

2. A towing device according to claim 1 characterised in that the cylinder (58) is connected to the second journal (52).

3. A towing device according to claim 2 characterised in that the cylinder (58) is pivoted to the frame (22) in such a way that the second journal (52) is displaced upwardly and rearwardly in the curved slot (36) upon extension of the piston rod (64) of the cylinder (58) and is displaced downwardly and forwardly in the associated slot (36) upon retraction of the piston rod (64) while the first journal (42) is displaced rearwardly in its slot (34) upon extension of the piston rod (64) and forwardly in its slot upon retraction of the piston rod (64).

4. A towing device according to one or more of the preceding claims characterised in that the angle lever (48) is also provided with a curved slot (56) in which the second journal (52) is displaceable.

5. A towing device according to one or more of the preceding claims characterised in that the curved slot (36) in the frame (22) is disposed on a circular arc whose centre point is displaced downwardly and rearwardly with respect to the pivotal mounting point (29) of the angle lever (48) on the frame (22).

6. A towing device according to one or more of the preceding claims characterised in that the frame (22) has side portions (24, 26) in which the slots (34, 36) are provided and between which the tow member (40) and the cylinder (60) are disposed.

7. A towing device according to one or more of the preceding claims characterised in that the angle lever (48) can be arrested in its position of lifting the tow member (40).

## Revendications

1. Dispositif d'attelage pour atteler un véhicule tracté (18) à un véhicule tracteur (10) comportant un organe tracteur (40) réglable en hauteur au moyen d'au moins un cylindre (58) actionné hydrauliquement, attaqué par au moins un levier coudé (48) monté sur un bâti (22) fixe par rapport au véhicule, le bâti (22) comportant au moins un trou oblong (34) s'étendant en direction longitudinale, dans lequel l'organe tracteur (40) est placé de façon à pouvoir se déplacer longitudinalement pendant le réglage en hauteur, grâce à un premier tenon (42), de telle façon qu'il se déplace vers l'arrière lors de l'abaissement, caractérisé en ce que le levier coudé reçoit l'organe tracteur (40) dans sa zone centrale ou à peu près dans celle-ci sur l'une de ses branches libres, tandis que l'autre branche libre est guidée dans un trou oblong en forme de came (36) prévu dans le bâti (22), grâce à un second tenon (52).

2. Dispositif d'attelage selon la revendication 1, caractérisé en ce que le cylindre (58) est raccordé au second tenon (52).

3. Dispositif d'attelage selon la revendication 2, caractérisé en ce que le cylindre (58) est articulé au bâti (22) de telle façon que, lors de la sortie de la tige de piston (64) du cylindre (58), le second tenon (52) se déplace dans le trou oblong en forme de came (36) vers le haut et vers l'arrière et, lors de la rétraction de la tige de piston (64), il se déplace vers le bas et vers l'avant dans le trou oblong (36) correspondant, tandis que le premier tenon (42) se déplace, lors de la sortie de la tige de piston (64), dans son trou oblong (34) vers l'arrière et, lors de la rétraction de la tige de piston (64), vers l'avant.

4. Dispositif d'attelage selon une ou plusieurs des revendications précédentes, caractérisé en ce que le levier coudé (48) comporte également un trou oblong en forme de came (56) dans lequel peut se déplacer le second tenon (52).

5. Dispositif d'attelage selon une ou plusieurs des revendications précédentes, caractérisé en ce que le trou oblong en forme de came (36) est placé dans le bâti (22) sur un arc de cercle dont le centre est, par rapport au point d'articulation (29) du levier coudé (48) au bâti (22), décalé vers le bas et vers l'arrière.

6. Dispositif d'attelage selon une ou plusieurs des revendications précédentes, caractérisé en ce que le bâti (22) comporte des éléments latéraux (24, 26) dans lesquels sont prévus les trous oblongs (34, 36) et entre lesquels sont placés l'organe tracteur (40) et le cylindre (60).

7. Dispositif d'attelage selon une ou plusieurs des revendications précédentes, caractérisé en ce que le levier coudé (48) peut être bloqué dans sa position relevant l'organe tracteur (40).

FIG. 1

FIG. 2

FIG. 3

FIG. 4

FIG. 5